# EUROPEAN PATENT SPECIFICATION

(11) **EP 3 722 095 B1**
(45) Date of publication and mention of the grant of the patent: **06.12.2023**
(21) Application number: 19188554.0
(22) Date of filing: 26.07.2019
(51) Int. Cl.: B32B 27/32, C08L 23/12

(54) **A POLYPROPYLENE COMPOSITION FOR RETORT PACKAGING APPLICATION**
POLYPROPYLENZUSAMMENSETZUNG FÜR STERILISIERBARE VERPACKUNGSANWENDUNG
COMPOSITION DE POLYPROPYLÈNE POUR APPLICATION D'EMBALLAGE STÉRILISABLE

(30) Priority: 12.04.2019 SG 10201903296W
(43) Date of publication of application: 14.10.2020
(73) Proprietor: Thai Polyethylene Co., Ltd., 10800 Bangkok (TH)
(72) Inventor: TREETHAMMAKUL, Supakitt, 10270 Samut Prakarn Province (TH)
(74) Representative: Viering, Jentschura & Partner mbB Patent- und Rechtsanwälte

(56) References cited:
- EP-A1- 1 724 289
- WO-A1-2009/073685
- WO-A1-2013/101931
- CN-A- 107 141 584
- US-A1- 2017 313 864

## Description

### TECHNICAL FIELD

Various embodiments relate to a polypropylene composition, a method to make a shaped article using the polypropylene composition, a shaped article produced by the polypropylene composition and use of the shaped article in retort packaging application.

### BACKGROUND

A retort packaging, otherwise known as a retort pouch or retortable pouch, refers to a type of packaging made from a laminate of flexible plastic and metal foils. It is used as an alternative to traditional industrial canning methods to allow sterile packaging of a wide variety of food products and pharmaceuticals handled by aseptic processing, whereby thermally sterilized products are packaged into sterilized containers under sterile conditions to produce shelf-stable products that do not require refrigeration.

Generally, a retort packaging comprises multiple layers of laminated films to comply with various requirements from a user. For example, the multiple layers of laminated films may comprise a first outer layer for direct contact with an external environment, a second outer layer disposed on an opposing surface of the multiple layers of laminated films for direct contact with the packaged product, and one or more middle layers disposed between the first outer layer and the second outer layer. Since the first outer layer is exterior to the packaging, hence viewable by a user, the first outer layer of the packaging may generally be designed to have printable properties. Accordingly, the first outer layer may serve an important function in terms of the aesthetics or appearance of the packaged product. Furthermore, the first outer layer may serve as a protective layer for maintaining integrity of the retort packaging against puncture forces. One or more of the middle layers may function as barrier layer(s), to prevent permeation of moisture and/or oxygen through the packaging. In addition, one or more of the middle layers may function as sealant layer(s), to adhere or join the various layers of the packaging using heat and pressure, to form the laminated films. Meanwhile, the second outer layer that is in direct contact with the packaged product may also function as a sealant layer, and may work singularly or in tandem with the sealant layer(s) of the middle layers to allow sealing of the content within the packaging upon application of heat.

At present, each retort packaging is cleaned manually post packaging, which results in low production rates of the packaged product, and introduces human error in the cleaning process. It would therefore be desirable to improve rates at which the retort packaging is cleaned so as to increase rates of producing the packaged product and to prevent human error. While it is possible to do so industrially using high pressure processing conditions or a thermal pasteurization process, otherwise termed as a sterilization process, it is a requirement for the seal provided by the retort packaging to remain intact during these harsh conditions, so as to prevent content of the retort packaging from leaking and result in seal through contamination.

Currently, this leakage problem is still unresolved in the production line, resulting in a lot of packaging waste and food waste. The layers of film making up the retort packaging therefore have to comply with requirements, such as good mechanical properties and strong adhesion between the layers of packaging to provide a good seal so as to avoid seal through contamination.

Further, it is desired for a packaging process, whereby the sealing process of the retort packaging is carried out at a low, or at least a lower seal initiation temperature as compared to state of the art methods, particularly in use of the retort packaging for food product. As used herein, seal initiation temperature (SIT), otherwise termed as seal initial temperature, refers to the lowest temperature at which a seal is formed for a specified seal strength. Given the direct contact of the food product with the packaging, this would be advantageous in preservation of quality of the food product. Moreover, the lower seal initiation temperature means that lower temperatures may be set on the sealing bars, which translate into improved speed in manufacturing the retort packaging.

Previous attempts to prevent or substantially avoid seal through contamination include (1) increasing seal initiation temperature (SIT) of polypropylene resins to form completely sealed polypropylene film layer(s), and/or (2) improving polarity of polypropylene resin leading to higher flowability of food on the resultant polypropylene film.

Notwithstanding the above, there remains a need for an improved sealant layer that overcomes or at least alleviates one or more of the above-mentioned problems. This may be in the form of an improved material for forming the sealant layer, for example, a polypropylene composition disclosed herein, and a shaped article produced therefrom, which allows for a high seal strength, preferably at a low seal initiation temperature, and which has demonstrated a reduction in seal through contamination.

### SUMMARY

In a first aspect, there is provided a polypropylene composition comprising
(a) 50 wt% to 76 wt% of homopolypropylene;
(b) 12 wt% to 25 wt% random copolymer polypropylene having 2 mol% to 10 mol% ethylene derived units; and
(c) 12 wt% to 25 wt% propylene-ethylene copolymer having 10 wt% to 25 wt% ethylene derived units.

In a second aspect, there is provided a method to produce a shaped article, the method comprising providing a polypropylene composition described according to the first aspect; and shaping the polypropylene composition into a shaped article.

In a third aspect, there is provided a shaped article obtained by the method of the second aspect.

In a fourth aspect, there is provided a shaped article comprising a polypropylene composition described according to the first aspect, wherein the shaped article (a) is a single layer film or a single layer sheet; or (b) is one or more sheets of a multi-layer film or a multi-layer sheet.

In a fifth aspect, there is provided use of the shaped article described according to the third aspect or various embodiments of the fourth aspect in retort packaging application.

### BRIEF DESCRIPTION OF THE DRAWINGS

In the following, further advantages and features of the subject-matter of the present application will be illustrated by way of examples together with drawings, wherein:
**FIG. 1A** is a graph depicting seal strength (N/15 mm) versus sealing temperature (°C) of Comparative Sample 1A and Samples 2A, 3A and 4A.
**FIG. 1B** is a graph depicting seal strength (N/15 mm) versus sealing temperature (°C) of Comparative Sample 1A and Samples 2A, 5A and 6A.
**FIG. 2A** is a graph depicting seal strength of film (obtained for a polypropylene composition according to Samples 2A, 3A and 4A) measured by hot tack testing, shown as force (N/25.4 mm) versus temperature (°C).
**FIG. 2B** is a graph depicting seal strength of film (obtained for a polypropylene composition according to Samples 2A, 5A and 6A) as measured by hot tack testing, shown as force (N/25.4 mm) versus temperature (°C).
**FIG. 3** is a graphical comparison of seal strength of film (obtained for a polypropylene composition according to Comparative Sample 1A, and Samples 2A and 3A) before and after retort process. Seal strength for after retort process was measured on the side of the retort packaging that contained food, and contamination was not found.
**FIG. 4A** is a photograph showing retort pouch of Comparative Sample 1A. As shown by the circled area in the figure, there was food leakage and seal through contamination observed at the seal area.
**FIG. 4B** is a photograph showing retort pouch of Sample 2A. Food leakage and seal through contamination were not observed.
**FIG. 4C** is a photograph showing retort pouch of Sample 3A. Food leakage and seal through contamination were not observed.
**FIG. 4D** is a photograph showing retort pouch of Sample 4A. Food leakage and seal through contamination were not observed.
**FIG. 4E** is a photograph showing retort pouch of Sample 5A. Food leakage and seal through contamination were not observed.
**FIG. 4F** is a photograph showing retort pouch of Sample 6A. Food leakage and seal through contamination were not observed.

### DETAILED DESCRIPTION

In a first aspect, there is provided a polypropylene composition comprising (a) 50 wt% to 76 wt% of homopolypropylene; (b) 12 wt% to 25 wt% random copolymer polypropylene having 2 mol% to 10 mol% ethylene derived units; and (c) 12 wt% to 25 wt% propylene-ethylene copolymer having 10 wt% to 25 wt% ethylene derived units. For brevity, the homopolypropylene, the random copolymer polypropylene, and the propylene-ethylene copolymer comprised in the polypropylene composition may be termed herein as component (a), component (b) and component (c) respectively. The weight percentages of components (a), (b) and (c) in the propylene compositions are calculated based on the total weight of the polypropylene composition. In various embodiments, the polypropylene composition consists of components (a), (b) and (c), i.e. weight percentages of components (a), (b) and (c) add up to 100 wt%.

Advantageously, the polypropylene composition of the present disclosure, or a shaped article produced therefrom, possesses good seal through performance and a low seal initiation temperature. For example, retort packaging formed of films produced from the polypropylene composition disclosed herein did not result in food leakage during the sterilization and packaging process, which renders the polypropylene composition suitable for use in retort packaging application. A polypropylene composition provided according to embodiments disclosed herein may substantially avoid seal through contamination issues from use of polypropylene. The choice and relative amounts of the polymers comprised in the polypropylene composition disclosed herein have demonstrated a synergistic effect to obtain the target properties between mechanical properties and seal performance, which may be due to factors such as chain entanglement of polymer, seal initiation temperature and seal through contamination.

In particular, it has been demonstrated that incorporation of a random copolymer polypropylene and a propylene-ethylene copolymer into the polypropylene composition, with each at an amount of at least 12 wt% and not more than 25 wt% of the polypropylene composition, can improve the mechanical properties such as strength of a resulting film prepared using the composition. For example, addition of random copolymer polypropylene may act as a compatibilizer to improve dispersion of the propylene-ethylene copolymer phase in the homopolypropylene matrix, which may result in improved mechanical properties of a shaped article, such as a single layer film, a multilayer film, or a retort packaging prepared using the polypropylene composition.

There is also careful consideration of the respective melt flow rates and melting points of the components (a), (b) and (c), which may be controlled by the comonomers of components (b) and (c). The propylene-ethylene copolymer may function to reduce seal initiation temperature of the polypropylene composition, as propylene-ethylene copolymers can be molten at lower temperatures. Advantageously, formulation of polypropylene compositions disclosed herein may be adjusted within the claimed ranges to provide an optimized balance between mechanical properties and sealing properties, hence allowing the resulting retort packaging to be tailored depending on intended application, such as content and size of the retort packaging for example. In some embodiments, both components (b) and (c) are propylene-based copolymers, meaning that each of the components (b) and (c) comprise at least 50 wt% of propylene derived repeat units. The components (b) and (c), based on their particular comonomer content, may have melting points which may be sufficiently low, and they are provided at a sufficient amount of at least 12 wt% of the polypropylene composition, to decrease the overall melting point of the composition, which is advantageous in order to decrease the seal initiation temperature. Additionally, compositions of the present disclosure according to various embodiments, due to their respective amounts and the distribution of comonomers in components (b) and (c), have shown a substantially retained seal strength even after harsh conditions of a sterilization process, including heating to 121 °C.

As used herein, the term "composition" refers to a blend of polymers, such as homopolymers, random copolymers, block polymers, terpolymers, or a combination thereof, wherein the polymers are already polymerized and do not engage into further polymerization upon blending. In the present context, the polypropylene composition comprises a physical blend of homopolypropylene, random copolymer polypropylene and propylene-ethylene copolymer. The composition may also be referred to as a "resin blend".

As used herein, the term "homopolypropylene" refers to a polymer which essentially consists or consists of repeat units derived from propylene. Homopolypropylene may, for example, comprise at least 99.0 %, more preferably at least 99.5 %, still more preferably at least 99.95 %, and yet more preferably at least 99.99%, or 100%, by weight of repeat units deriving from propylene.

According to various embodiments, the homopolypropylene may be present in the polypropylene composition at an amount of 50 wt% to 76 wt%, such as 60 wt% to 76 wt%, or at an amount of 60 wt% to 70 wt%. In some embodiments, homopolypropylene accounts for at least 60 wt% of the polypropylene composition. According to various embodiments, the homopolypropylene may have a melt flow rate of 1 g/10 min to 10 g/10 min at 230°C, 2.16 kg according to ASTM D 1238-13, or 2 g/10 min to 5 g/10 min or 2 g/10 min to 4 g/10 min at 230 °C, 2.16 kg according to ASTM D 1238-13. The homopolypropylene may have a molecular weight distribution (Mw/Mn) of 4 g/mol to 15 g/mol, more preferably 5 g/mol to 10 g/mol. The density of the homopolypropylene may range from 0.88 g/cm³ to 0.92 g/cm³, more preferably from 0.89 g/cm³ to 0.91 g/cm³.

The homopolypropylene may have a melting point in the range of 150 °C to 170 °C measured with a differential scanning calorimeter (DSC), more preferably in the range of 160 °C to 165 °C. If the melting point is less than this range, for example less than 160 °C, the obtained shaped articles may have poor heat resistance which may not be suitable for retort packaging application.

Besides the homopolypropylene, the polypropylene composition also contains a random copolymer polypropylene. As used herein the term "random copolymer polypropylene" refers to a polymer comprising repeat units derived from propylene and at least one other comonomer, such as two, three, four or five other comonomers. The random copolymer polypropylene may comprise at least 50 wt% propylene derived units, or more than 50 wt% of propylene derived units, and at least 0.05 wt %, more preferably at least 0.1 wt %, and still more preferably at least 0.4 wt% of a repeat unit derived from at least one other comonomer. According to various embodiments, the repeat units derived from at least one other comonomer in the random copolymer polypropylene is 15 wt% or less. The other comonomer may be selected from any α-olefin excluding propylene, and may for example be a C₂-₂₀ alkylene such as a C₂-₁₂ alkylene. Accordingly, the other comonomer may be selected from the group consisting of ethylene, butylene, pentylene, hexylene, heptylene, octylene, nonylene, decylene, and combinations thereof.

In various embodiments, the other comonomer is a ethylene derived unit. Accordingly, the random copolymer polypropylene may comprise up to 10 mol% ethylene derived units, such as 2 mol% to 10 mol% ethylene derived units, 3 mol% to 9 mol% ethylene derived units, 4 mol% to 8 mol% ethylene derived units, 2 mol% to 7 mol% ethylene derived units, 2 mol% to 5 mol% ethylene derived units or 2 mol% to 4 mol% ethylene derived units, or about 3 mol% ethylene derived units.

According to various embodiments, the random copolymer polypropylene may be present at an amount of 12 wt% to 25 wt%, or the random copolymer polypropylene may be present at an amount of 15 wt% to 25 wt%, or at an amount of 15 wt% to 20 wt%. Alternatively, the random copolymer polypropylene may be present at an amount of 25 wt%. Advantageously, when the random copolymer polypropylene is present at an amount of 25 wt% the resulting polypropylene composition may show a very high tensile strength at break of 287 kg/cm² and a very high elongation at break of 726 %.

Preferably, the random copolymer polypropylene has a melt flow rate (MFR) of 5 g/10 min to 10 g/10 min according to ASTM D 1238-13 at 230°C, 2.16 kg, more preferably a MFR of 6.5 g/10 min to 7.5 g/10 min, even more preferably a MFR of 7.0 g/10 min to 7.5 g/10 min.

In various embodiments, the random copolymer polypropylene may have a melting point in the range of 140 °C to 165 °C, such as in the range of 145 °C to 155 °C or 150 °C to 160 °C, measured with a differential scanning calorimeter (DSC).

The polypropylene composition disclosed herein also comprises a propylene-ethylene copolymer. As used herein, the term "propylene-ethylene copolymer" refers to a copolymer comprising repeat units derived from propylene and ethylene. In various embodiments, the propylene-ethylene copolymer comprises at least 50 wt% of propylene derived units, such as at least 60 wt% or at least 70 wt% of propylene derived units. In addition to the repeat units derived from propylene and ethylene, the copolymer may further be derived from additional comonomers such as butylene, and/or other alpha-olefins having 5 to 18 carbon atoms. Alternatively, it may substantially consist or consist entirely of repeat units derived from propylene and ethylene.

According to various embodiments, the propylene-ethylene copolymer may have 10 wt% to 25 wt% ethylene derived units, such as 15 wt% to 20 wt% ethylene derived units, or about 16 wt% ethylene derived units. The ethylene units may be distributed randomly in the propylene polymer, which may be isotactic. Within the context of this disclosure, the low crystalline copolymers of propylene/alpha-olefin have a melt flow rate of from about 0.2 dg/min to about 20 dg/min, a melting point from about 80 °C to about 150 °C and a density of about 0.88 g/cm³ to about 0.92 g/cm³.

Inclusion of the propylene-ethylene copolymer in the polypropylene composition has advantageously resulted in improved mechanical strength of the resultant polypropylene composition according to embodiments disclosed herein. According to various embodiments, the propylene-ethylene copolymer may be present at an amount of 12 wt% to 25 wt%, or 15 wt% to 25 wt%, or at an amount of 15 wt% to 20 wt%. Alternatively, the propylene-ethylene copolymer may be present at an amount of 20 wt% to 25 wt% in the polypropylene composition. Advantageously, when the propylene-ethylene copolymer is present at an amount of at least 20 wt% in the polypropylene composition, the resulting polypropylene composition may show a very high tensile strength at break of 261 kg/cm² or 244 kg/cm² and a very high elongation at break of 664 % and 676 %.

According to various embodiments, the propylene-ethylene copolymer has a MFR of 0.1 g/10 min to 15 g/10 min, measured at 230°C, 2.16 kg, according to ASTM D1238. All individual values and sub-ranges from 0.1 g/10 min to 15 g/10 min are included herein and disclosed herein; for example, the propylene-ethylene copolymer may have a melt flow rate in the range of 0.1 g/10 min to 10 g/10 min, such as 0.2 g/10 min to 10 g/ 10 min, 0.5 g/10 min to 10 g/ 10 min, 1 g/10 min to 10 g/ 10 min, 2 g/10 min to 10 g/ 10 min, 2.5 g/10 min to 10 g/ 10 min. In some embodiments, the propylene-ethylene copolymer has a MFR of 2.5 g/10 min to 15 g/10 min.

Preferably, the propylene-ethylene copolymer may have a molecular weight distribution (Mw/Mn) of 3.5 g/mol or less, preferably 3.0 g/mol or less and more preferably 1.8 g/mol to 3.0 g/mol.

In some embodiments, components (a), (b) and (c) of the polypropylene composition have a melting point in the range of 145 °C to 165 °C.

The homopolypropylene and random copolymer polypropylene may be prepared by any conventional methods known in the art. For example, homopolypropylene and random copolymer polypropylene may be produced in a reactor or a multi-stage reactor in the presence of a catalyst system. The catalyst system may comprise a Ziegler-Natta catalyst or metallocene catalyst. In specific embodiments, the catalyst system comprises a Ziegler-Natta catalyst.

The polypropylene composition of the present disclosure may be prepared using any method known in the art, such as, but not limited to, mechanical mixing using high-shear internal mixers of the Banbury type, or by mixing directly in the twin screw extruder.

According to various embodiments, the composition may have a melt flow rate of 0.1 g/10 min to 4.0 g/10 min at 230 °C, 2.16 kg according to ASTM D 1238-13.

Preferred polypropylene compositions of the present disclosure may comprise at least two, more preferably all of the following properties:
(i) MFR of 0.1 g/10 min to 4.0 g/10 min;
(ii) seal strength of 15 N/15 mm to 30 N/15 mm; and
(iii) seal initiation temperature of 165°C for a seal strength of at least 15 N/15 mm.

The polypropylene composition of the present disclosure and shaped articles prepared thereof, may also contain various additives capable of imparting specific properties to the shaped articles. Additives known to those skilled in the art that may be used in these blends include, but are not limited to, fillers such as talc and calcium carbonate, pigments, antioxidants, stabilizers, anti-corrosion agents, slip agents, and antiblock agents, etc.

The polypropylene composition of the present disclosure is particularly well suited for use in blow film processing and/or coextrusion casting to prepare a shaped article. The shaped article may be, for example, a film, a layer, or a sheet.

Accordingly, in a second aspect, there is provided a method to produce a shaped article, the method comprising providing a polypropylene composition comprising 50 wt% to 76 wt% of homopolypropylene; 12 wt% to 25 wt% random copolymer polypropylene having 2 mol% to 10 mol% ethylene derived units; and 12 wt% to 25 wt% propylene-ethylene copolymer having 10 wt% to 25 wt% ethylene derived units; and shaping the polypropylene composition into a shaped article. Suitable homopolypropylene, random copolymer polypropylene, and propylene-ethylene copolymer that may be used have already been discussed above.

In various embodiments, shaping the polypropylene composition into a shaped article comprises blow film processing, film casting and/or coextruding the polypropylene composition. The blow film processing, film casting, and/or co-extrusion may be carried out according to methods well known in the art. Furthermore, the film or sheet materials of this disclosure may be laminated with other materials after the respective blow film processing, film casting, and/or extrusion as well. Again, known techniques in laminating sheets and films may be applied to form these laminates.

Accordingly, in a third aspect, there is provided a shaped article obtained by the method as described above.

In a fourth aspect, there is provided a shaped article comprising a polypropylene composition comprising 50 wt% to 76 wt% of homopolypropylene; 12 wt% to 25 wt% random copolymer polypropylene having 2 mol% to 10 mol% ethylene derived units; and 12 wt% to 25 wt% propylene-ethylene copolymer having 10 wt% to 25 wt% ethylene derived units.

According to various embodiments, the shaped article may be a single layer film or a single layer sheet. The polypropylene composition of the first aspect may serve as a sealant layer, for example, as one or more middle layers or as the outer layer that is in contact with the packaged content such as food in a retort packaging.

According to various embodiments, the shaped article is one or more sheets of a multi-layer film or a multilayer-sheet. For example, one or more of the single layer film or the single layer sheet mentioned above may be part of a multi-layer film or a multi-layer sheet. The polypropylene composition disclosed herein may be used to form a multi-layer polypropylene film by cast co-extrustion. The multi-layer film is not limited in the number of layers, and may for example have two, three, four, five, ten, fifteen, or twenty layers. The multi-layer film or a multi-layer sheet may define a pouch or a bag. An inner layer of the pouch or the bag may be the single layer film or the single layer sheet.

In a particular embodiment, the shaped article may be a retort pouch for food. The shaped article may advantageously have a seal strength of at least 15 N/15 mm according to ASTM F 88-15. Preferably, the shaped article comprising the polypropylene composition may have a seal strength in the range of 15 N/15 mm to 30 N/15 mm according to ASTM F 88-15, more preferably 20 N/15 mm to 27 N/15 mm and still more preferably 22 N/15 mm to 25 N/15 mm. For a seal strength of at least 15 N/15 mm, seal initiation temperature may be at 165 °C. Advantageously, these sealing properties of the polypropylene composition in the present disclosure is able to provide good and/or improved protection from seal through contamination in the shaped article.

Other mechanical properties such as elongation at break, tensile at yield, tensile at break, and/or 2% secant modulus may also be improved by use of the polypropylene composition as presently disclosed. For example, elongation at break may be in the range of about 400 % to about 800 %, such as about 450 % to about 750 %, or about 500 % to about 700 %. Tensile at yield, on the other hand, may be in the range of about 100 kg/cm² to about 300 kg/cm², such as about 100 kg/cm² to about 250 kg/cm², or about 100 kg/cm² to about 200 kg/cm². Tensile at break may be in the range of about 100 kg/cm² to about 300 kg/cm², such as about 150 kg/cm² to about 250 kg/cm². 2% secant modulus may be in the range of about 3,000 kg/cm² to about 5,000 kg/cm², such as about 3,500 kg/cm² to about 4,500 kg/cm², or about 3,500 kg/cm² to about 4,000 kg/cm².

According to the various advantages provided by the present disclosure, there is, in a fifth aspect, provided use of the shaped article as described herein in retort packaging application.

The terms "comprising", "including", "containing", etc. shall be read expansively and without limitation.

Hereinafter, the present disclosure will be described more fully with reference to the accompanying drawings. In the drawings, lengths and sizes of layers and regions may be exaggerated for clarity.

### EXPERIMENTAL SECTION

### Example 1: Measurement methods

The following describes the property testing of the polypropylene composition of the present disclosure. The test methods and the equipment employed are conventionally used and are not intended to limit the scope of the disclosure.
(1) Melt flow rate (MFR): Melt flow rate (MFR) was determined according to ASTM D1238-13 at 230 °C 2.16 kg.
(2) Density: Density was determined according to ASTM D 1505-10.
(3) Tensile strength of film: The measurement of tensile strength, elongation, and secant modulus of film was performed in accordance with ASTM D 882-12.
(4) Seal strength: Seal strength was determined according to the standard ASTM F88-15.
(5) Hot tack testing: Seal initiation temperature of film was determined by Hot tack instrument according to the standard ASTM F1921-12.
(6) Seal-through contamination testing
   (6.1) Sample preparation: Flat retortable pouches were used to evaluate seal through contamination properties of the polypropylene film disclosed herein. The pouches were prepared in the form of three side seal packaging pouches, using hot seal bar machine with constant heating seal bars at 180 °C, pressure 2 bar and holding time 1 second. The three side seal packaging pouches had inner dimensions of 12.0 cm x 15.0 cm. The three side seal packaging pouches formed small bags, each containing 200 ml of a food simulant. The remaining side of the pouches was sealed to close the retortable pouch, and in a fixed position to control the volume and head space inside each filled pouch.
   (6.2) Food simulant preparation: The food simulant used is a mixture of white vinegar, tomato sauce, and soil bean oil in a 1:1:1 weight ratio.
   (6.3) Retort process: The retort process was conducted using a 40 liters capacity high pressure autoclave machine (single basket type) from Vertical Floor-Standing Autoclaves SYSTEC V-Series. Water was used as the pressure transmitting fluid. First, the filled pouches were preheated to an initial temperature of 100 °C prior to pressure sterilization. After that, the temperature and pressure were increased to 121 °C and 2.2 MPa, respectively, and held for 30 min to 35 min at this condition. Different conditions from that mentioned above may be used depending on factors such as food type and pouch size. Generally, in retort pouch packaging, free space that is available in the packaging is controlled so as to optimize pressure within the packaging. After sterilization process at controlled temperature and pressure, the filled pouches were cooled, and pressure in the autoclave was released. The filled pouches were taken out from the chamber, and tested for general appearance, leakage at seal area, and seal strength after retort process.

### Example 2: Preparation of the polypropylene composition

All starting materials were commercially available.

Homopolypropylene (hPP) had MFR of 2.5 g/10 min at 230 °C, weight of 2.16 kg and molecular weight distribution of 7.5 g/mol, and density of 0.910 g/cm³. Random copolymer polypropylene (rPP) comprised 3 mol% ethylene unit and had a density of 0.910 g/cm³. Propylene-ethylene copolymer comprised isotactic polypropylene with 16 wt% randomly distributed ethylene unit.

The homopolypropylene, random copolymer polypropylene and propylene-ethylene copolymer were blended at various ratios as shown in **Table 1** by using a twin screw extruder.

The obtained blended polypropylene composition was shaped into a film with 70 µm thickness by co-extrusion process. The films obtained from the polypropylene compositions were then analyzed as described above. The results are shown in **Table 1.**

**Table 1: The compositions and properties of Comparative Sample 1A, and Samples 2A to 6A**

| **Sample** | **hPP (wt%)** | **rPP (wt%)** | **Propylen e-ethylene copolyme r (wt%)** | **Tensile strength at yield (kg/cm²)** | **Tensile strength at break (kg/cm²)** | **Elongatio n at break (%)** | **2% Secant modulus (kg/cm²)** |
|---|---|---|---|---|---|---|---|
| Comparative Sample 1A | 80 | 10 | 10 | 206 | 202 | 569 | 2400 |
| Sample 2A | 70 | 15 | 15 | 166 | 167 | 399 | 2826 |
| Sample 3A | 65 | 20 | 15 | 166 | 182 | 477 | 3791 |
| Sample 4A | 60 | 25 | 15 | 168 | 287 | 726 | 3633 |
| Sample 5A | 65 | 15 | 20 | 152 | 261 | 664 | 3423 |
| Sample 6A | 60 | 15 | 25 | 138 | 244 | 676 | 2953 |

Comparing the samples having the same amount of propylene-ethylene copolymer at 15 wt%, namely Samples 2A, 3A and 4A, Sample 4A with the highest random copolymer polypropylene content at 25 wt% demonstrated the highest tensile strength at break and elongation at break as shown in **Table 1.** The tensile strength at break and elongation at break of Sample 4A were also higher than that of Comparative Sample 1A. For example, the tensile strength at break achieved was 287 kg/cm², while Comparative Sample 1A only achieved a tensile strength at break value of 202 kg/cm². Regarding the elongation at break, Sample 4A showed an elongation at break of 726 %, as compared to that for Comparative Sample 1A, which had an elongation at break of only 569 %.

Without wishing to be bound by theory, it is thought that random copolymer polypropylene can function as a compatibilizer to improve dispersion of the propylene-ethylene copolymer phase in the homopolypropylene matrix, leading to better mechanical properties of film.

Comparing the samples having the same amount of random copolymer polypropylene (15 wt%) but with varying amount of propylene-ethylene copolymer, namely Samples 2A, 5A and 6A, it was found that the amount of propylene-ethylene copolymer did not significantly affect the tensile strength at yield of the film. Sample 2A showed a slightly higher tensile strength at yield than Samples 5A and 6A, which may result from the higher homopolypropylene content of Sample 2A. However, it was found that Samples 5A and 6A, which had at least 20 wt% propylene-ethylene copolymer, showed better tensile strength at break and elongation at break as compared to Sample 2A. The comparison was made to see the effect of propylene-ethylene copolymer content on the properties of the polypropylene composition.

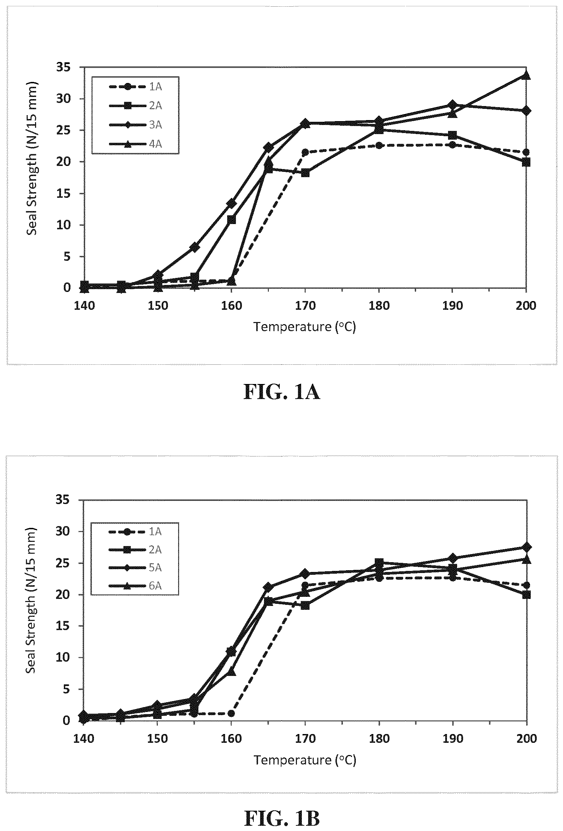

Seal strength was measured for Comparative Sample 1A and Samples 2A, 3A and 4A at various temperatures and the results are shown in **FIG. 1A****.** Sample 3A demonstrated the lowest seal initiation temperature with higher seal strength in the transition stage of film sealing between 145 °C and 165 °C. This compares favorably against Comparative Sample 1A, which showed a high seal initiation temperature, sealing only between 160 °C and 170 °C and having a seal strength of below about 10 N/15 mm at 165 °C. Without wishing to be bound by theory, it is thought that the polypropylene composition comprising homopolypropylene, random copolymer polypropylene and propylene-ethylene copolymer at the various ratios as set out in the claims provided a synergistic effect to obtain the target properties between mechanical properties and seal performance.

**FIG. 1B** shows the seal strength measured for Comparative Sample 1A and Samples 2, 5 and 6 at various temperatures. It is illustrated that at a low temperature region around 140 °C to 155 °C, the seal strength of the film is enhanced significantly by increasing propylene-ethylene copolymer content. However, the polypropylene (PP) matrix would show a dominant effect at a high temperature range (160 °C to 200 °C) because the PP matrix can be completely melted and fused between film layers in this temperature range. In other words, seal strength of the film at a high temperature range depends on strength of homopolypropylene as it can be completely melted and be fused between the layers, while the random copolymer polypropylene and propylene-ethylene copolymer perform the fusion of film at a low temperature range. Thus, optimizing of formulation should be balanced between easy seal function and mechanical properties of film.

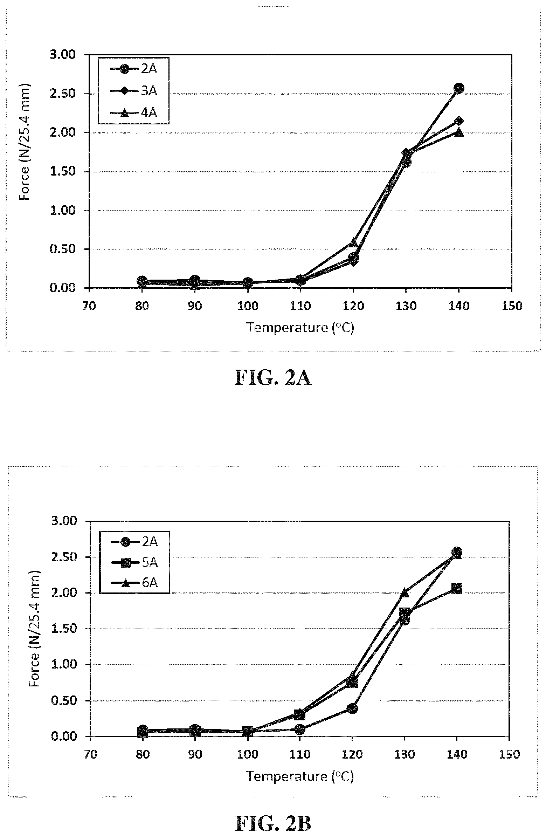

To ensure the seal initiation temperature of the film, hot tack measurement was also carried out to measure the seal strength of the film during molten stage. Corresponding to **FIG. 1A** and **FIG. 1B****,** there was no significant effect of random copolymer polypropylene on seal performance, but the results in **FIG. 2A** and **FIG. 2B** showed that there are some parts of film that were molten and sealed between the layers. This may imply that seal initiation temperature of the film was decreased by blending random copolymer polypropylene and propylene-ethylene copolymer in homopolypropylene. With increasing of propylene-ethylene copolymer content, seal initiation temperature of the film was shifted to the lower temperature range.

Comparative Sample 1A and Samples 2A to 6A were laminated with polyethylene terephthalate (PET) films with 12 mm thickness, in which PET films were on the top and the bottom i.e. both ends of the sample. The laminated films were sealed three sides to form pouches for filling with a food sample.

A second sample of Comparative Sample 1A and Sample 5A were used to prepare the laminated retortable packaging, labelled herein as Comparative Sample 1B and Sample 5B, respectively. For Comparative Sample 1B and Sample 5B, dry lamination process was used to form polyethylene terephthalate/aluminium/nylon/Comparative Sample 1B, or polyethylene terephthalate/aluminium/nylon/Sample 5B film structures to form pouches, followed by filling the pouch with the food sample using the method as mentioned above.

The food sample was prepared by mixing a commercial tomato sauce, vinegar and vegetable oil in equal weight ratio of 1:1:1. 200 ml of food sample was filled into the Comparative Samples 1A and 1B, and Samples 2A, 3A, 4A, 5A and 5B, and 6A. The pouches were heat sealed at a temperature of 180 °C, and a pressure of 4 bar was applied for 4 seconds to close the pouch. After sealing, the pouch was brought to an autoclave at overpressure condition and at a temperature of 121 °C for 30 minutes. Observation in terms of whether there was food leakage was made and reported in **Table 2.**

The inventive examples show complete seal of pouch, as there was no leakage of food from the pouch and no food contamination at the seal area. Comparative Samples 1A and 1B, on the other hand, both showed food leakage and contamination at the seal area.

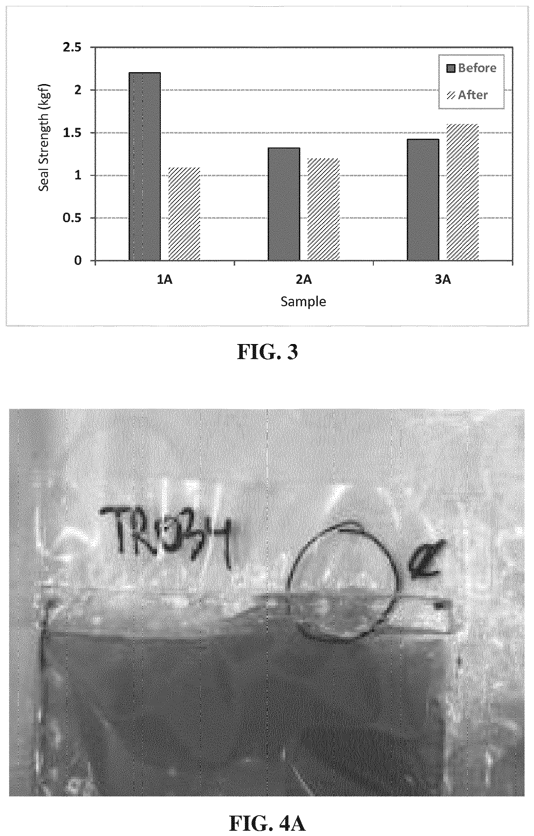

The seal performance after autoclave process was investigated. The results are shown in **FIG. 3****.** The seal strength after autoclave process of Samples 2A and 3A was maintained. This is in contrast to Comparative Sample 1A, which showed that seal strength dramatically decreased after the autoclave process.

**Table 2 Food leakage results of Comparative Samples 1A and 1B, and Samples 2A, 3A, 4A, 5A and 5B, and 6A.**

| **Sample** | **Leakage / contamination at the seal area** |
|---|---|
| Comparative Sample 1A | Food leakage and contamination at the seal area. |
| Comparative Sample 1B | Food leakage and contamination at the seal area. |
| Sample 2A | No leakage/no contamination |
| Sample 3A | No leakage/no contamination |
| Sample 4A | No leakage/no contamination |
| Sample 5A | No leakage/no contamination |
| Sample 5B | No leakage/no contamination |
| Sample 6A | No leakage/no contamination |

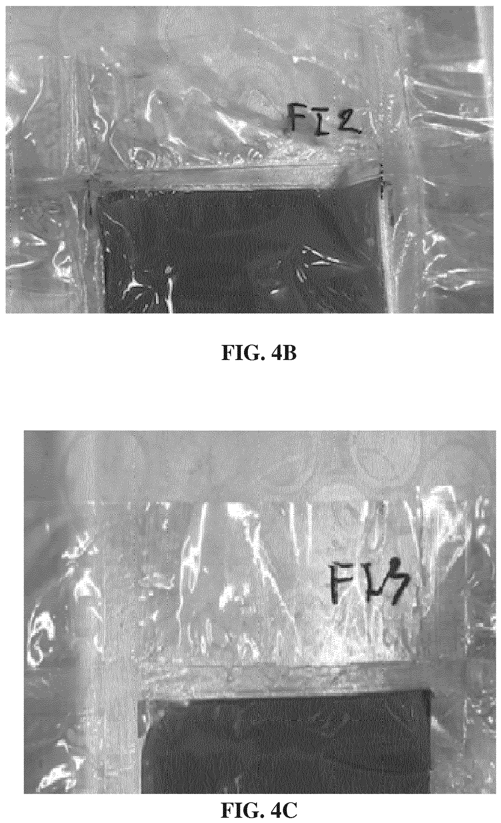

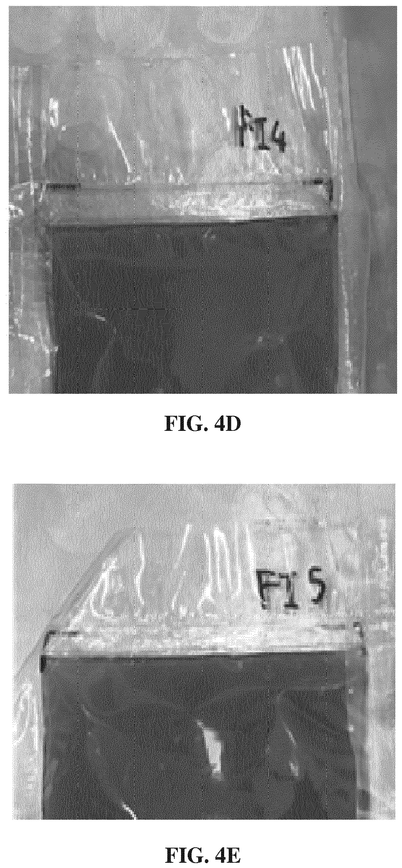

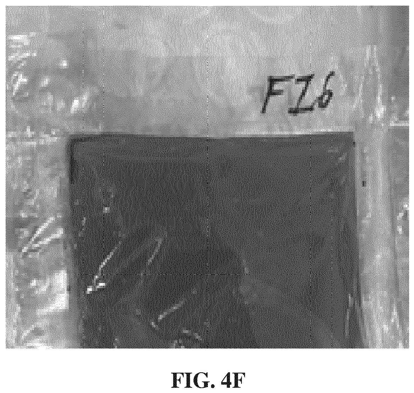

**FIG. 4A** to **FIG. 4F** are photographs showing retouch pouch of Comparative Sample 1A (**FIG. 4A**) and of Samples 2A to 6A (**FIG. 4B** to **4F**). As can be seen from the figures, there was food leakage and seal through contamination observed at the seal area of Comparative Sample 1A, whereas none was observed for Samples 2A to 6A.

## Claims

1. A polypropylene composition comprising
(a) 50 wt% to 76 wt% of homopolypropylene;
(b) 12 wt% to 25 wt% random copolymer polypropylene having 2 mol% to 10 mol% ethylene derived units; and
(c) 12 wt% to 25 wt% propylene-ethylene copolymer having 10 wt% to 25 wt% ethylene derived units.

2. The polypropylene composition according to claim 1, wherein the homopolypropylene, the random copolymer polypropylene, and the propylene-ethylene copolymer in the polypropylene composition add up to 100 wt%.

3. The polypropylene composition according to claim 1 or 2, wherein the random copolymer polypropylene and/or the propylene-ethylene copolymer comprises at least 50 wt% propylene derived units.

4. The polypropylene composition according to any one of claims 1 to 3, wherein the random copolymer polypropylene is present at an amount of 25 wt% and/or has 2 mol % to 5 mol % ethylene derived units.

5. The polypropylene composition according to any one of claims 1 to 4, wherein the propylene-ethylene copolymer has a melt flow rate of 1 g/10 min to 15 g/10 min at 230 °C, 2.16 kg according to ASTM D 1238-13.

6. The polypropylene composition according to any one of claims 1 to 5, wherein the propylene-ethylene copolymer is present at an amount of 20 wt% to 25 wt% and/or has 15 wt% to 20 wt% ethylene derived units.

7. The polypropylene composition according to any one of claims 1 to 6, wherein the homopolypropylene has a melt flow rate of 1 g/10 min to 10 g/10 min at 230 °C, 2.16 kg according to ASTM D 1238-13 and/or has a molecular weight distribution in the range of 4 g/mol to 15 g/mol.

8. The polypropylene composition according to any one of claims 1 to 7, wherein the composition has a melt flow rate of 0.1 g/10 min to 4.0 g/10 min at 230 °C, 2.16 kg according to ASTM D 1238-13 and/or components (a), (b) and (c) have a melting point in the range of 145 °C to 165 °C.

9. A method to produce a shaped article, the method comprising providing a polypropylene composition according to claim 1; and shaping the polypropylene composition into a shaped article.

10. A shaped article obtained by the method according to claim 9.

11. A shaped article comprising a polypropylene composition according to claim 1, wherein the shaped article (a) is a single layer film or a single layer sheet; or (b) is one or more sheets of a multi-layer film or a multi-layer sheet.

12. The shaped article according to claim 11, wherein the multi-layer film or multi-layer sheet defines a pouch or a bag.

13. The shaped article according to any one of claims 10 to 12, having a seal strength of at least 15 N/15mm at a seal initiation temperature of 165 °C.

14. Use of the shaped article according to any one of claims 10 to 13 in retort packaging application.

## Patentansprüche

1. Eine Polypropylen-Zusammensetzung, die aufweist
(a) 50 Gew.-% bis 76 Gew.-% Homopolypropylen;
(b) 12 Gew.-% bis 25 Gew.-% statistisches Copolymer-Polypropylen mit 2 Mol-% bis 10 Mol-% von Ethylen abgeleiteten Einheiten; und
(c) 12 Gew.-% bis 25 Gew.-% Propylen-Ethylen-Copolymer mit 10 Gew.-% bis 25 Gew.-% von Ethylen abgeleiteten Einheiten.

2. Die Polypropylen-Zusammensetzung nach Anspruch 1, wobei das Homopolypropylen, das statistische Copolymer-Polypropylen und das Propylen-Ethylen-Copolymer in der Polypropylen-Zusammensetzung bis zu 100 Gew.-% ergeben.

3. Die Polypropylen-Zusammensetzung nach Anspruch 1 oder 2, wobei das statistische Copolymer-Polypropylen und/oder das Propylen-Ethylen-Copolymer mindestens 50 Gew.-% von Propylen abgeleitete Einheiten aufweist.

4. Die Polypropylenzusammensetzung nach einem der Ansprüche 1 bis 3, wobei das statistische Copolymer-Polypropylen in einer Menge von 25 Gew.-% vorhanden ist und/oder 2 Mol-% bis 5 Mol% von Ethylen abgeleitete Einheiten hat.

5. Die Polypropylen-Zusammensetzung nach einem der Ansprüche 1 bis 4, wobei das Propylen-Ethylen-Copolymer eine Schmelzflussrate von 1 g/10 min bis 15 g/10 min bei 230 °C, 2,16 kg gemäß ASTM D 1238-13 hat.

6. Die Polypropylen-Zusammensetzung nach einem der Ansprüche 1 bis 5, wobei das Propylen-Ethylen-Copolymer in einer Menge von 20 Gew.-% bis 25 Gew.-% vorhanden ist und/oder 15 Gew.-% bis 20 Gew.-% von Ethylen abgeleitete Einheiten hat.

7. Die Polypropylen-Zusammensetzung nach einem der Ansprüche 1 bis 6, wobei das Homopolypropylen eine Schmelzflussrate von 1 g/10 min bis 10 g/10 min bei 230 °C, 2,16 kg gemäß ASTM D 1238-13 und/oder eine Molekulargewichtsverteilung im Bereich von 4 g/mol bis 15 g/mol hat.

8. Die Polypropylen-Zusammensetzung nach einem der Ansprüche 1 bis 7, wobei die Zusammensetzung eine Schmelzflussrate von 0,1 g/10 min bis 4,0 g/10 min bei 230 °C, 2,16 kg gemäß ASTM D 1238-13 hat und/oder Komponenten (a), (b) und (c) einen Schmelzpunkt im Bereich von 145 °C bis 165 °C haben.

9. Ein Verfahren zur Herstellung eines geformten Gegenstandes, wobei das Verfahren Bereitstellung einer Polypropylen-Zusammensetzung gemäß Anspruch 1; und Formen der Polypropylen-Zusammensetzung zu einem geformten Gegenstand aufweist.

10. Ein geformter Gegenstand, erhalten durch das Verfahren nach Anspruch 9.

11. Ein geformter Gegenstand, der eine Polypropylen-Zusammensetzung nach Anspruch 1 aufweist, wobei der geformte Gegenstand (a) eine einschichtiger Folie oder ein einschichtiges Blatt ist; oder (b) ein oder mehrere Blätter einer mehrschichtigen Folie oder eines mehrschichtigen Blattes ist.

12. Der geformte Gegenstand nach Anspruch 11, wobei die mehrschichtige Folie oder das mehrschichtige Blatt einen Beutel oder eine Tasche definiert.

13. Der geformte Gegenstand nach einem der Ansprüche 10 bis 12, der eine Siegelnahtfestigkeit von mindestens 15 N/15 mm bei einer Siegelinitiierungstemperatur von 165 °C hat.

14. Verwendung des geformten Gegenstandes nach einem der Ansprüche 10 bis 13 in einer Retortenverpackungsanwendung.

## Revendications

1. Composition de polypropylène, comprenant :
(a) 50 % en poids à 76 % en poids d'homopolypropylène ;
(b) 12 % en poids à 25 % en poids de polypropylène copolymère aléatoire ayant 2 % en moles à 10 % en moles d'unités dérivées d'éthylène ; et
(c) 12 % en poids à 25 % en poids de copolymère propylène-éthylène ayant 10 % en poids à 25 % en poids d'unités dérivées d'éthylène.

2. Composition de polypropylène selon la revendication 1, dans laquelle l'homopolypropylène, le polypropylène copolymère aléatoire et le copolymère propylène-éthylène dans la composition de polypropylène s'additionnent jusqu'à 100 % en poids.

3. Composition de polypropylène selon la revendication 1 ou 2, dans laquelle le polypropylène copolymère aléatoire et/ou le copolymère propylène-éthylène comprend au moins 50 % en poids d'unités dérivées de propylène.

4. Composition de polypropylène selon l'une quelconque des revendications 1 à 3, dans laquelle le polypropylène copolymère aléatoire est présent à un montant de 25 % en poids et/ou comporte de 2 % en moles à 5 % en moles d'unités dérivées d'éthylène.

5. Composition de polypropylène selon l'une quelconque des revendications 1 à 4, dans laquelle le copolymère propylène-éthylène a un débit de fonte de 1 g/10 min à 15 g/10 min à 230 °C, 2,16 kg selon ASTM D 1238-13.

6. Composition de polypropylène selon l'une quelconque des revendications 1 à 5, dans laquelle le copolymère propylène-éthylène est présent à un montant de 20 % en poids à 25 % en poids et/ou comporte 15 % en poids à 20 % en poids d'unités dérivées d'éthylène.

7. Composition de polypropylène selon l'une quelconque des revendications 1 à 6, dans laquelle l'homopolypropylène a un débit de fonte de 1 g/10 min à 10 g/10 min à 230 °C, 2,16 kg selon ASTM D 1238-13 et/ou a une distribution de poids moléculaire dans la gamme de 4 g/mol à 15 g/mol.

8. Composition de polypropylène selon l'une quelconque des revendications 1 à 7, dans laquelle la composition a un débit de fonte de 0,1 g/10 min à 4,0 g/10 min à 230 °C, 2,16 kg selon ASTM D 1238-13 et/ou les composants (a), (b) et (c) ont un point de fusion dans la plage de 145 °C à 165 °C.

9. Procédé de fabrication d'un article façonné, le procédé comprenant la fourniture d'une composition de polypropylène selon la revendication 1 ; et le façonnage de la composition de polypropylène en un article façonné.

10. Article façonné obtenu par le procédé selon la revendication 9.

11. Article façonné comprenant une composition de polypropylène selon la revendication 1, dans lequel l'article façonné (a) est un film monocouche ou une feuille monocouche ; ou (b) est une ou plusieurs feuilles d'un film multicouche ou d'une feuille multicouche.

12. Article façonné selon la revendication 11, dans lequel le film multicouche ou la feuille multicouche définit une poche ou un sac.

13. Article façonné selon l'une quelconque des revendications 10 à 12, ayant une résistance au scellage d'au moins 15 N/15mm à une température d'amorçage de scellage de 165 °C.

14. Utilisation de l'article façonné selon l'une quelconque des revendications 10 à 13 dans une application d'emballage en autoclave.
